(19)

Europäisches Patentamt
European Patent Office
Office européen des brevets

(11) **EP 2 398 866 B1**

(12) **EUROPEAN PATENT SPECIFICATION**

(45) Date of publication and mention
of the grant of the patent:
**04.03.2015 Bulletin 2015/10**

(51) Int Cl.:
**C09K 8/565** *(2006.01)*     **C09K 8/16** *(2006.01)*
**C09K 8/32** *(2006.01)*     **C09K 8/80** *(2006.01)*
**C09K 8/504** *(2006.01)*

(21) Application number: **10736457.2**

(22) Date of filing: **29.01.2010**

(86) International application number:
**PCT/US2010/022535**

(87) International publication number:
**WO 2010/088484 (05.08.2010 Gazette 2010/31)**

(54) **DEFLUIDIZING LOST CIRCULATION PILLS**

ENTFLUIDISIERENDE SPÜLUNGSVERLUSTPILLEN

DÉFLUIDISATION DE PILULES DE PERTE DE CIRCULATION

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority:  **30.01.2009   US 148712 P**
                **17.06.2009   US 218010 P**

(43) Date of publication of application:
**28.12.2011   Bulletin 2011/52**

(73) Proprietor: **M-I L.L.C.**
**Houston, TX 77072 (US)**

(72) Inventors:
• **SANDERS, Mark, W.**
  **Kincardineshire**
  **Aberdeen AB31 5TT (GB)**

• **SCORSONE, Jason, T.**
  **Houston, TX 77064 (US)**
• **PATEL, Arvind, D.**
  **Sugar Land, TX 77478 (US)**

(74) Representative: **Giovannini, Francesca et al**
**Osha Liang**
**32, avenue de l'Opéra**
**75002 Paris (FR)**

(56) References cited:
**WO-A1-00/66878**     **US-A- 4 083 407**
**US-A- 5 990 234**     **US-A- 6 152 227**
**US-A1- 2002 157 575**     **US-A1- 2002 157 575**
**US-A1- 2005 221 994**     **US-A1- 2007 244 014**
**US-B1- 7 297 663**     **US-B2- 7 041 167**

EP 2 398 866 B1

**Description**

BACKGROUND OF INVENTION

Field of the Invention

Embodiments disclosed herein relate generally to methods and compositions for lost circulation pills.

Background Art

During the drilling of a wellbore, various fluids are typically used in the well for a variety of functions. The fluids may be circulated through a drill pipe and drill bit into the wellbore, and then may subsequently flow upward through the wellbore to the surface. During this circulation, the drilling fluid may act to remove drill cuttings from the bottom of the hole to the surface, to suspend cuttings and weighting material when circulation is interrupted, to control subsurface pressures, to maintain the integrity of the wellbore until the well section is cased and cemented, to isolate the fluids from the formation by providing sufficient hydrostatic pressure to prevent the ingress of formation fluids into the wellbore, to cool and lubricate the drill string and bit, and/or to maximize penetration rate.

Wellbore fluids may also be used to provide sufficient hydrostatic pressure in the well to prevent the influx and efflux of formation fluids and wellbore fluids, respectively. When the pore pressure (the pressure in the formation pore space provided by the formation fluids) exceeds the pressure in the open wellbore, the formation fluids tend to flow from the formation into the open wellbore. Therefore, the pressure in the open wellbore is typically maintained at a higher pressure than the pore pressure. While it is highly advantageous to maintain the wellbore pressures above the pore pressure, on the other hand, if the pressure exerted by the wellbore fluids exceeds the fracture resistance of the formation, a formation fracture and thus induced mud losses may occur. Further, with a formation fracture, when the wellbore fluid in the annulus flows into the fracture, the loss of wellbore fluid may cause the hydrostatic pressure in the wellbore to decrease, which may in turn also allow formation fluids to enter the wellbore. As a result, the formation fracture pressure typically defines an upper limit for allowable wellbore pressure in an open wellbore while the pore pressure defines a lower limit. Therefore, a major constraint on well design and selection of drilling fluids is the balance between varying pore pressures and formation fracture pressures or fracture gradients though the depth of the well.

As stated above, wellbore fluids are circulated downhole to remove rock, as well as deliver agents to combat the variety of issues described above. Fluid compositions may be water- or oil-based and may comprise weighting agents, surfactants, proppants, viscosifiers, fluid loss additives, and polymers. However, for a wellbore fluid to perform all of its functions and allow wellbore operations to continue, the fluid must stay in the borehole. Frequently, undesirable formation conditions are encountered in which substantial amounts or, in some cases, practically all of the wellbore fluid may be lost to the formation. For example, wellbore fluid can leave the borehole through large or small fissures or fractures in the formation or through a highly porous rock matrix surrounding the borehole.

Lost circulation is a recurring drilling problem, characterized by loss of drilling mud into downhole formations. However, other fluids, besides "drilling fluid" can potentially be lost, including completion, drill-in, production fluid, etc. Lost circulation can occur naturally in formations that are fractured, highly permeable, porous, cavernous, or vugular. These earth formations can include shale, sands, gravel, shell beds, reef deposits, limestone, dolomite, and chalk, among others.

Lost circulation may also result from induced pressure during drilling. Specifically, induced mud losses may occur when the mud weight, required for well control and to maintain a stable wellbore, exceeds the fracture resistance of the formations. A particularly challenging situation arises in depleted reservoirs, in which the drop in pore pressure effectively weakens a wellbore through permeable, potentially hydrocarbon-bearing rock formation, but neighboring or inter-bedded low permeability rocks, such as shales, maintain their pore pressure. This can make the drilling of certain depleted zones impossible because the mud weight required to support the shale exceeds the fracture resistance of the sands and silts. Another unintentional method by which lost circulation can result is through the inability to remove low and high gravity solids from fluids. Without being able to remove such solids, the fluid density can increase, thereby increasing the hole pressure, and if such hole pressure exceeds the formation fracture pressure, fractures and fluid loss can result.

Various methods have been used to restore circulation of a drilling fluid when a lost circulation event has occurred, particularly the use of "lost circulation materials" that seal or block further loss of circulation. These materials may generally be classified into several categories: surface plugging, interstitial bridging, and/or combinations thereof. In addition to traditional lost circulation material (LCM) pills, crosslinkable or absorbing polymers, and cement or gunk squeezes have also been employed.

US 2007/244014 describes a method comprising: providing a treatment fluid that comprises a base fluid, and a polymeric fluid loss control additive that comprises at least a first plurality of polymer molecules having a first average molecular weight, and a second plurality of polymer molecules having a second average molecular weight, wherein the first average molecular weight is different from the second average molecular weight; and introducing the treatment fluid into a subterranean formation. Further, the treatment fluid may comprise composite particulates such as calcium silicate and ground cellulose fiber. The treatment fluids optionally may comprise any number of additional additives, including weighting agents.

US 2002/157575 describes a natural fiber-containing cementing system comprising a hydraulic cement, water, and at least one natural mineral fiber material, such as at least one fibrous calcium silicate material. Examples of suitable calcium silicate fibers include wollastonite. Other additives including weighting agents may be employed. The natural fiber-containing cement compositions may also be optionally formulated to contain consolidating fibers, such as nylon or polypropylene fibers. Examples of suitable consolidating fibers include at least one of carbon fibers, nylon fibers, polypropylene fibers, or a mixture thereof.

US 6 152 226 describes a composition designed for drilling through shallow water flow by combining a fibrous material, a silicate material, a graphite material, a light weighting material and a cementitious material. Cellulose microfibers as fibrous materials are preferred but other fibers with similar characteristics, such as glass microfibers, can be used. Further, the drilling fluid system may also include an activatable fast-setting cementitious material such as Portland cement.

Accordingly, there exists a continuing need for developments for new LCM treatments that may be used during a lost circulation event so that circulation may be more readily resumed.

SUMMARY OF INVENTION

In a first aspect, embodiments disclosed herein relate to a slurry for treating a wellbore that includes a base fluid; from 1.4 g/dm$^3$ to 28 g/dm$^3$ (0.5 ppb to 10 ppb) of at least one synthetic fibrous structure; at least one weighting agent; and a plurality of calcium silicate particles. In a second aspect, embodiments disclosed herein relate to a method of reducing loss of wellbore fluid in a wellbore to a formation, comprising: introducing into the wellbore an slurry according to the first aspect; and applying pressure to the slurry to decrease the fluid content of the slurry.

Other aspects and advantages of the invention will be apparent from the following description and the appended claims.

DETAILED DESCRIPTION

Embodiments disclosed herein relate to novel wellbore fluid compositions. In particular, embodiments disclosed herein relate to slurry pills that may be defluidized (dewatered or deoiled) to leave behind a plug or seal as a lost circulation treatment. A primary component of the resulting plug or seal is silicate particles (pre-existing particles, e.g., wollastonite) and/or a fibrous structure. As used herein, the term "pill" is used to refer to a relatively small quantity (typically less than 32 m$^3$ (200 bbl)) of a special blend of wellbore fluid to accomplish a specific task that the regular wellbore fluid cannot perform. In one specific embodiment, the lost circulation pill may be used to plug a "thief zone," which simply refers to a formation into which circulating fluids can be lost.

Lost circulation pills disclosed herein employ a slurry of a base fluid and a plurality of silicate particles, optionally with at least one fibrous structure, at least one weighting agent, and/or at least one bridging agent. In an alternative embodiment, lost circulation pills disclosed herein employ a slurry of a base fluid, an LCM material (including but not limited to the silicate particles), a weighting agent, and at least one synthetic fibrous structure, optionally with at least one natural fibrous structure, and/or at least one bridging agent. In yet other embodiments, the pills may include a number of other additives known to those of ordinary skill in the art, such as wetting agents, viscosifiers, surfactants, dispersants, interfacial tension reducers, pH buffers, mutual solvents, thinners, thinning agents, rheological additives and cleaning agents. In a particular embodiment, a fibrous structure may be added to an LCM pill in a thinner or dispersant that acts as a carrier for the fibrous structure, particularly if the LCM pill is at higher concentrations or if the pill generally has higher concentrations of the other components

What is significant, is upon placing the pill in the wellbore, the pill may be defluidized to lose a substantial portion of the base fluid to the formation such that the plurality of silicate particles and/or plurality of fibrous structures form a plug or seal having sufficient compressive and/or shear strength for the particular application, and which may increase the tensile strength of the rock formation.

For the embodiments that include weighting agents therein, the inventors of the present application have discovered that while high fluid loss LCM pills may lose strength upon addition of a weighting agent, incorporation of at least one synthetic fibrous structure may result in the pill increasing in strength (from the lower strength value observed without the addition of the fibrous structure). In particular, it is theorized that the inclusion of a weighting agent in an LCM pill may interfere with the stacking or imbrication of the LCM materials, to result in a lower strength plug or seal (than without the weighting agent). However, at least a portion of the strength may be restored by addition of the fibrous structure.

In accordance with some embodiments of the present disclosure, the "silicate particles" used in the LCM materials are "pre-existing" silicate particles, *i.e.,* limited to particles existing or formed prior to formulation in a slurry and/or use in a wellbore operation, as compared to any particles that could be formed *in situ* (by reaction of chemical reactants or precursors) upon slurry formulation or during a wellbore operation. However, in other embodiments, an LCM material may include any silicate particles that could be formed *in situ* (by reaction of chemical reactants or precursors) upon slurry formulation or during a wellbore operation.

Calcium silicate may occur as $CaSiO_3$, $CaSiO_4$, $Ca_2SiO_4$, $Ca_3Si_2O_7$, $Ca_3(Si_3O_9)$ and $Ca_4(H_2Si_4O_{13})$ with various percentages of water of crystallization, and may be either naturally (mined) or synthetically formed. Natural calcium silicate minerals are known by various names including larnite, hillebrandite, foshagite, afwillite, foshallasite, gjellebaekite, grammite, table spate, wollastonite, xonaltite, xonotlite, eaklite and calcium pectolith. While any of such calcium silicate forms may be used in the LCM materials of the present disclosure, in a particular embodiment, wollastonite or synthetically formed $CaSiO_3$ may be the preferred calcium silicate for use in some embodiments of the LCM pills of the present disclosure.

Wollastonite is a naturally occurring mineral, largely composed of calcium, silicon, and oxygen, from CaO and $SiO_2$ which primarily combine to form calcium metasilicate or $CaSiO_3$. While wollastonite primarily contains $CaSiO_3$, one skilled in the art would appreciate that there may be some trace metal ions present, such as iron, and manganese, and magnesium substituting for calcium. The crystal habits of wollastonite often include lamellar, radiating, compact and fibrous aggregates, as well as tabular crystals. If natural wollastonite is used, it may be desirable to purify or beneficiate the naturally formed ore, such as by magnetic and/or flotation separation means known in the art.

However, in other embodiments, the LCM material may include materials other than a plurality of silicate particles. The LCM materials that may be used in accordance with the present disclosure may include any material that may aid in forming a plug or seal to reduce fluid loss, and in particular embodiments, may include any LCM material that may form a defluidized plug or seal. For example, in one embodiment, the LCM material may include diatomaceous earth, calcium carbonate, aluminum silicate, or any other type of defluidizing LCM material known in the art. The LCM material may be added to the pill in an amount ranging from 1.4 $g/dm^3$ to 228 $g/dm^3$ (0.5 ppb to 80 ppb) in some embodiments; however, more or less may be desired depending on the particular application.

The particle size of the various LCM materials (pre-existing silicate particles or other LCM materials) may also be selected depending on the particular application, in particular on the level of fluid loss, formation type, and/or the size of fractures predicted for a given formation. The LCM particles may range in size from nanoscale to a macro-scale, for example, in a particular embodiment from 100 nanometers to 3000 microns, and preferably 25 microns to 1500 microns. The size may also depend on the other particles selected for use in the LCM pill. Typically, the fractures that may be plugged or filled with a particulate-based treatment may have a fracture width at the mouth in the range 0.1 to 5 mm. However, the fracture width may be dependent, amongst other factors, upon the strength (stiffness) of the formation rock and the extent to which the pressure in the wellbore is increased to above initial fracture pressure of the formation during the fracture induction (in other words, the fracture width is dependent on the pressure difference between the drilling mud and the initial fracture pressure of the formation during the fracture induction step). In some embodiments, the LCM materials may have a planar or sheet-like structure, with an aspect ratio of greater than about 4. Such structure may result in greater imbrication or stacking of the particles to form the plug or seal.

The amount of LCM materials (silicate particles or other LCM materials) present in a slurry may depend on the fluid loss levels, the anticipated fractures, the density limits for the pill in a given wellbore and/or pumping limitations, etc. For example, generally, an upper limit on most wellbore applications would be 428 $g/dm^3$ (150 pounds per barrel), above which point the slurry is too thick to adequately mix. In particular embodiments, the amount of LCM material in a slurry may range from 28 $g/dm^3$ to 143 $g/dm^3$ (10 ppb to 50 ppb); however, more or less may be used in other embodiments.

As mentioned above, some embodiments may include at least one fibrous structure to optionally be used with the silicate or wollastonite particles to aid in suspension and viscosification of the slurry, but may also provide additional compressive strength to the resulting plug or seal. However, other embodiments may use other LCM materials, where the addition of the fibrous structure (synthetic, in particular) may restore at least a portion of the strength loss due to the incorporation of a weighting agent. As used herein, the term "fibrous structure" refers to an additive that has an elongated structure. The fibrous structure may be inert (does not react with) with respect to the base fluid and the silicate particles or other LCM materials used.

Various embodiments of the present disclosure may use a fibrous structure that has an elongated structure, which may be spun into filaments or used as a component of a composite material such as paper. In a particular embodiment, the fibers may range in length from greater than 3 mm to less than 20 mm. While some embodiments may use a synthetic fibrous structure, other embodiments may include either a naturally occurring fibrous (such as cellulose) material, and/or a synthetic (such as polyethylene, or polypropylene) fibrous material.

Synthetic fibers may include, for example, polyester, acrylic, polyamide, polyolefins, polyaramid, polyurethane, vinyl polymers, glass fibers, carbon fibers, regenerated cellulose (rayon), and blends thereof. Vinyl polymers may include, for example, polyvinyl alcohol. Polyesters may include, for example, polyethylene terephthalate, polytriphenylene terephthalate, polybutylene terephthalate, polylatic acid, and combinations thereof. Polyamides may include, for example, nylon 6, nylon 6,6, and combinations thereof. Polyolefins may include, for example, propylene based homopolymers, copolymers, and multi-block interpolymers, and ethylene based homopolymers, copolymers, and multi-block interpolymers, and combinations thereof. The fibrous structure may be added to the pill in an amount ranging from 1.4 $g/dm^3$ to 28 $g/dm^3$ (0.5 ppb to 10 ppb) in some embodiments; however, more or less may be desired depending on the particular application.

A natural fibrous structure may optionally be used with the LCM materials (including silicate particles or other LCM materials) to aid in suspension and viscosification of the slurry, as well as provide additional compressive strength to the resulting plug or seal. As used herein, the term "natural fibrous structure" refers to an additive formed from a naturally occurring material that has an elongated structure, which may be spun into filaments or used as a component of a composite material such as paper. Similar to the synthetic fibrous structure described above, the natural fibrous structure may be inert (does not react with) with respect to the base fluid and to the LCM materials. When included, natural fibers may be present in an amount up to 50 percent by weight of the pill.

Natural fibers generally include vegetable fibers, wood fibers, animal fibers, and mineral fibers. In particular, the natural fibers components used in conjunction with wollastonite include cellulose, a polysaccharide containing up to thousands of glucose units. Cellulose from wood pulp has typical chain lengths between 300 and 1700 units, whereas cotton and other plant fibers as well as bacterial celluloses have chain lengths ranging from 800 to 10,000 units. No limit on the type of natural fibers (or cellulose in particular) that may be used in the pills of the present disclosure is intended; however, in a particular embodiment, cellulose fibers may be either virgin or recycled, extracted from a wide range of plant species such as cotton, straw, flax, wood, etc. Additionally, it is also within the scope of the present disclosure that such cellulosic materials may be combined, pressed together to form larger sheets. Some commercial sources of cellulose (paper) may optionally be coated to render the sheets hydrophilic or hydrophobic; however, such coatings are optional. The sheets may then be finely divided for use in the slurries disclosed herein.

Further, as mentioned above, the pills of the present disclosure may optionally include at least one weighting agent to provide the desired weight to the pills. As is known in the art, control of density may be desired to balance pressures in the well and prevent a blowout. To prevent a blowout, the fluid in the well may have a density effective to provide a greater pressure than that exerted from the formation into the well. However, densities should not be too high or else they may cause further lost circulation. Thus, it is often desirable to modify the density of an LCM pill with weighting agents to balance the pressure requirements of the well. Weighting agents may be selected from one or more of the materials including, for example, barium sulphate (barite), calcium carbonate (calcite), dolomite, ilmenite, hematite or other iron ores, olivine, siderite, manganese oxide, and strontium sulfate. Additionally, it is also within the scope of the present disclosure that the fluid may also be weighted up using salts (either in a water- or oil-based pill) such as those described above with respect to brine types. One having ordinary skill in the art would recognize that selection of a particular material may depend largely on the density of the material as typically, the lowest wellbore fluid viscosity at any particular density is obtained by using the highest density particles. Weighting agents may be added to the pill in an amount such that the final density may range from 0.8 $g/cm^3$ (6.5 pounds per gallon (ppg)) to 2.4 $g/cm^3$ (20 ppg) in some embodiments.

Thus, according to one embodiment of the present disclosure, an LCM pill may include a base fluid and a plurality of pre-existing silicate particles (such as wollastonite). Optionally components may include at least one natural and/or synthetic fibrous structure, at least one weighting agent, and/or at least one bridging agent. When a fibrous structure is used in combination with the silicate / wollastonite particles, the ratio of silicate particles to fiber may range from 50:50 at the low end to 95:5 at the upper end depending on the number and type of fiber(s) employed. In various embodiments, the pill may include up to 20 percent by weight silicate / wollastonite particles, up to 15 percent by weight fibrous structure (either natural fibrous structure and/or synthetic fibrous structure), and a balance base fluid for pill densities up to 2.4 $g/cm^3$ (20 ppg). Further, one skilled in the art would appreciate after reading the teachings contained in the present disclosure that the amount of fibrous structure (natural and/or synthetic) added to the pill may depend on the amount of wollastonite, the presence (and amount) of weighting agent in the pill, the total amount of solids present, and the length of the fibers and may be adjusted accordingly (upwards or downwards) so long as the fluid is mixable and pumpable.

In accordance with another embodiment of the present disclosure, an LCM pill may include at least one LCM material (including but not limited to silicate / wollastonite) and at least one synthetic fibrous structure in combination with a base fluid and weighting agent. The ratio of LCM materials to fiber may range from 50:50 at the low end to 95:5 at the upper end depending on the number and type of fiber(s) employed. Additionally, in a particular embodiment, the pill may include 28 $g/dm^3$ to 428 $g/dm^3$ (10 ppb to 150 ppb) LCM materials, weighting agent in amount such that the final density may range from 0.8 $g/cm^3$ (6.5 pounds per gallon (ppg)) to 2.4 $g/cm^3$ (20 ppg), up to 10 percent by weight synthetic fibrous structure (up to 5 or 3 weight percent by weight synthetic fiber in more particular embodiments), optionally a natural fibrous structure at up to 15 percent by weight, and a balance base fluid for pill densities up to 2.4 $g/cm^3$ (20

ppg). Further, one skilled in the art would appreciate after reading the teachings contained in the present disclosure that the amount of synthetic fibrous structure added to the pill may depend on the amount of LCM materials, the type of LCM material, the amount of weighting agent in the pill, and the length of the synthetic fibers and may be adjusted accordingly (upwards or downwards) so long as the fluid is mixable and pumpable.

However, according to another embodiment of the present disclosure, an LCM pill may include a slurry of a base fluid, an LCM material (including but not limited to the pre-existing silicate particles), a weighting agent, and at least one synthetic fibrous structure. Optional components may include at least one natural fibrous structure, and/or at least one bridging agent.

The base fluid may be an aqueous fluid or an oleaginous fluid. The aqueous fluid may include at least one of fresh water, sea water, brine, mixtures of water and water-soluble organic compounds and mixtures thereof. For example, the aqueous fluid may be formulated with mixtures of desired salts in fresh water. Such salts may include, but are not limited to alkali metal chlorides, hydroxides, or carboxylates, for example. In various embodiments of the drilling fluid disclosed herein, the brine may include seawater, aqueous solutions wherein the salt concentration is less than that of sea water, or aqueous solutions wherein the salt concentration is greater than that of sea water. Salts that may be found in seawater include, but are not limited to, sodium, calcium, aluminum, magnesium, potassium, strontium, and lithium, salts of chlorides, bromides, carbonates, iodides, chlorates, bromates, formates, nitrates, oxides, phosphates, sulfates, silicates, and fluorides. Salts that may be incorporated in a brine include any one or more of those present in natural seawater or any other organic or inorganic dissolved salts. Additionally, brines that may be used in the pills disclosed herein may be natural or synthetic, with synthetic brines tending to be much simpler in constitution. In one embodiment, the density of the pill may be controlled by increasing the salt concentration in the brine (up to saturation). In a particular embodiment, a brine may include halide or carboxylate salts of mono- or divalent cations of metals, such as cesium, potassium, calcium, zinc, and/or sodium.

The oleaginous fluid may be a liquid, more preferably a natural or synthetic oil, and more preferably the oleaginous fluid is selected from the group including diesel oil; mineral oil; a synthetic oil, such as hydrogenated and unhydrogenated olefins including polyalpha olefins, linear and branch olefins and the like, polydiorganosiloxanes, siloxanes, or organosiloxanes, esters of fatty acids, specifically straight chain, branched and cyclical alkyl ethers of fatty acids; similar compounds known to one of skill in the art; and mixtures thereof. Selection between an aqueous fluid and an oleaginous fluid may depend, for example, on the type of drilling fluid being used in the well at the time of the lost circulation event. Use of the same fluid type may reduce contamination and allow drilling to continue upon plugging of the formation fractures / fissures, etc.

In addition to the silicate / wollastonite particles (or other LCM materials), fibrous structures, and/or weighting agents, it is also within the scope of the present disclosure that bridging agents may also be incorporated into the LCM pills. Particulate-based treatments may include use of particles frequently referred to in the art as bridging materials. For example, such bridging materials may include at least one substantially crush resistant particulate solid such that the bridging material props open and bridges or plugs the fractures (cracks and fissures) that are induced in the wall of the wellbore. As used herein, "crush resistant" refers to a bridging material is physically strong enough to resist the closure stresses exerted on the fracture bridge. Examples of bridging materials suitable for use in the present disclosure include graphite, calcium carbonate (preferably, marble), dolomite ($MgCO_3 \cdot CaCO_3$), celluloses, micas, proppant materials such as sands or ceramic particles and combinations thereof. Such particles may range in size from 25 microns to 1500 microns. Selection of size may depend on the level of fluid loss, the fracture width, the formation type, etc.

One skilled in the art would appreciate that depending on components present in the fluid, the pH of the fluid may change. In particular embodiments of the present disclosure, the pH of the LCM treatment fluid may be less than about 10, and between about 7.5 and 8.5 in other embodiments. However, in other embodiments, a greater pH may be desired, and may be achieved by including an alkaline material such as lime to the pill.

As mentioned above, the components disclosed herein may be combined to form a wellbore fluid, and an LCM slurry in particular. Upon introduction into the wellbore (by spotting a slug or pill of the LCM slurry adjacent a permeable formation), the slurry may be defluidized. Defluidization of the slurry may deposit a plug or seal of LCM materials (silicate / wollastonite particles or other LCM materials as well as other optional particles) optionally with a supporting fibrous structure on the wellbore wall, reducing or blocking the efflux of fluid into the formation. Upon sealing the permeable formation, circulation of the drilling fluid may continue and a traditional filter cake may be formed on top of the LCM filter cake to better seal the wellbore walls.

Spotting an LCM pill adjacent a permeable formation may be accomplished by methods known in the art. For example, the "thief' or permeable formation will often be at or near the bottom of the wellbore because when the permeable formation is encountered the formation will immediately begin to take drilling fluid and the loss of drilling fluid will increase as the permeable formation is penetrated eventually resulting in a lost circulation condition. In such situations, the LCM slurry may be spotted adjacent the permeable formation by pumping a slug or pill of the slurry down and out of the drill pipe as is known in the art. It may be, however, that the permeable formation is at a point farther up in the wellbore, which may result, for example, from failure of a previous seal. In such cases, the drill pipe may be raised as is known in the art so that the pill or slug of the LCM slurry may be deposited adjacent the permeable formation. The volume of the slug of LCM pill that is spotted adjacent the permeable formation may range from less than that of the open hole to more than double that of the open hole.

Defluidization of the LCM slurry may be accomplished either by hydrostatic pressure or by exerting a low squeeze pressure as is known in the art. Hydrostatic pressure will complete the seal; however, a low squeeze pressure may be desirable because incipient fractures or other areas of high permeability can be thereby opened and plugged immediately, thus reinforcing the zone and reducing or avoiding the possibility of later losses. After the defluidization is completed, the drilling fluid may be recirculated through the wellbore to deposit a filtercake on the formation seal, and drilling may be resumed. Injection of the particles into the formation may be achieved by an overbalance pressure *(i.e.,* an overbalance pressure greater than the formation pressure). While in particular embodiments, the injection pressure may range from 0.7 to 2.8 MPa (100 to 400 psi), any overbalance pressure level, including less than 0.7 MPa (100 psi) or greater than 2.8 MPa (400 psi) may alternatively be used. The selection of the injection pressure may simply affect the level of injection of the pill into the formation.

In some instances, it may be necessary to use more than one LCM pill. Such need may arise when the first pill was insufficient to plug the fissures and thief zone or was placed incorrectly. Further, in some instances, the first pill may have sufficiently plugged the first lost circulation zone, but a second (or more) lost circulation zone also exists needed treatment.

It is also within the scope of the present disclosure that one or more spacer pills may be used in conjunction with the pills of the present disclosure. A spacer is generally characterized as a thickened composition that functions primarily as a fluid piston in displacing fluids present in the wellbore and/or separating two fluids from each other.

EXAMPLES

The following example is provided to further illustrate the application and the use of the methods and compositions of the present disclosure.

Example 1

Slurries of LCM materials in water were formulated as shown below in Table 1. The slurries were de-fluidized across an aloxite disc in an inverted permeability plugging apparatus. Defluidizing times and relative strength values (in defluidized state) under pressures ranging from 0.7 to 2.8 MPa (100-400 psi) were measured, the results of which are also shown in Table 1. Penetrometer strength was measured by driving a 4mm diameter cylindrical, flat-faced probe of a Brookfield QTS-25 Texture Analysis Instrument into a defluidized sample at a constant speed of 5 mm per minute. FORM-A-SQUEEZE® is a lost circulation pill available from the Alpine Specialty Chemicals division of M-I SWACO (Houston, Texas), and INTERFIBE® FTP is a cellulose fiber product available from J. Rettenmaier USA LP (Schoolcraft, MI)

Table 1

| Sample | Conc. g/dm$^3$ (ppb) | Defluidizing Time (min:sec) | Penetrometer Strength MPa (psi) |
|---|---|---|---|
| Sample 1 | 28 g/dm$^3$ (10 ppb) INTERFIBE® FTP & 86 g/dm$^3$ (30 ppb) wollastonite in water | 1:03 | >82.7 (12,000) |
| Sample 2 | 28 g/dm$^3$ (10 ppb) INTERFIBE® FTP & 86 g/dm$^3$ (30 ppb) wollastonite in LVT-200 | 1:06 | >82.7 (12,000) |
| Sample 3 | 14 g/dm$^3$ (5 ppb) INTERFIBE® FTP & 100 g/dm$^3$ (35 ppb) wollastonite in water | 1:05 | >82.7 (12,000) |
| Sample 4 | 14 g/dm$^3$ (5 ppb) INTERFIBE® FTP & 43 g/dm$^3$ (15 ppb) wollastonite in water | 1:10 | >82.7 (12,000) |
| Sample 5 | 28 g/dm$^3$ (10 ppb) paper mache & 86 g/dm$^3$ (30 ppb) wollastonite in water | 1:34 | >82.7 (12,000) |
| Sample 6 | 28 g/dm$^3$ (10 ppb) paper mache & 86 g/dm$^3$ (30 ppb) wollastonite in LVT-200 | 1:07 | >82.7 (12,000) |

(continued)

| Sample | Conc. g/dm$^3$ (ppb) | Defluidizing Time (min:sec) | Penetrometer Strength MPa (psi) |
|---|---|---|---|
| Comparative Sample 1 | 228 g/dm$^3$ (80 ppb) FORM-A-SQUEEZE® in water | 2:42 | 15.3 (2217) |

As seen from Table 1, Samples 1-6 all defluidized faster than the comparative sample and possessed a penetrometer strength of significantly greater than the comparative sample. Further, in various embodiments (depending on the relative amounts of the pill components), the plugs or seals of the present disclosure may have a penetrometer strength (measured on the QTS-25 Texture Analysis Instrument using a 4 mm cylindrical, flat-faced probe into a defluidized pill sample at 5 mm / min) of upwards of 20.7 MPa (3,000 psi) and upwards of 68.9 MPa (10,000 psi), 82.7 (12,000), or more in other embodiments.

Example 2

Slurries of LCM materials in water were formulated as shown below in Table 2. EMI-1810 is a LCM pill of wollastonite and a cellulosic material in water, available from M-I LLC (Houston, Texas). EMI-1820 is a LCM pill of wollastonite, a cellulosic material, and polyvinyl alcohol fibers in water, also available from M-I LLC. EZ SQUEEZE® is a LCM pill available from Turbo-Chem International, Inc. (Scott, Louisiana). Super Sweep is a polypropylene fiber from FORTA Corporation (Grove City, PA). RSC 15 is a polyvinyl alcohol fiber, supplied by New NYCON Materials (Westerly, RI). AC 06 and AR 12 are fiberglass fibers, supplied by New NYCON Materials (Westerly, RI). AGM 94 is a carbon fiber, supplied by Asbury Carbons (Asbury, NJ). AS 1925 is a carbon fiber, supplied by Hexcel Corporation (Salt Lake City, UT). PA6 and PU6 1 are carbon fibers, each supplied by Grafil Inc. (Sacramento, CA). FORM-A-SQUEEZE® is a LCM pill available from M-I LLC. VPB102 is a polyvinyl alcohol fibers, produced by Kuraway (Okayama, Japan).

Table 2

| Sample | Slurries | Shear Strength MPa (psi) |
|---|---|---|
| Sample 7 | 114 g/dm$^3$ (40 ppb) EMI-1810 | 14.52 (2106) |
| Sample 8 | Sample 7 at 1.4 g/cm$^3$ (12 ppg) | 2.04 (296) |
| Sample 9 | Sample 7 at 1.5 g/cm$^3$ (12.5 ppg) | 1.73 (251) |
| Sample 10 | Sample 7 at 1.9 g/cm$^3$ (16 ppg) | 0.46 (67) |
| Sample 11 | Sample 8 + 2.8 g/dm$^3$ (1 ppb) Super Sweep - ½" | 4.55 (660) |
| Sample 12 | Sample 8 + 5.7 g/dm$^3$ (2 ppb) Super Sweep - ½" | 5.07 (736) |
| Sample 13 | Sample 8 + 5.7 g/dm$^3$ (2 ppb) RSC 15 -1/3" | 6.35 (921) |
| Sample 14 | Sample 8 + 17 g/dm$^3$ (6 ppb) AC 06 - ½" | 3.05 (442) |
| Sample 15 | Sample 8 + 11 g/dm$^3$ (4 ppb) AR 12 - ½" | 5.47 (793) |
| Sample 16 | Sample 8 + 2.8 g/dm$^3$ (1 ppb) AGM 94 -1/4" | 4.49 (651) |
| Sample 17 | Sample 8 + 2.8 g/dm$^3$ (1 ppb) AGM 94 -1/8" | 4.29 (623) |
| Sample 18 | Sample 8 + 5.7 g/dm$^3$ (2 ppb) AGM 62 -1/4" | 4.68 (679) |
| Sample 19 | Sample 8 + 11 g/dm$^3$ (4 ppb) AS1925 - ¼ | 4.84 (702) |
| Sample 20 | Sample 8 + 17 g/dm$^3$ (6 ppb) AS1925 - ¼" | 7.09 (1029) |
| Sample 21 | Sample 9 + 17 g/dm$^3$ (6 ppb) A1925 - ¼" | 6.33 (918) |
| Sample 22 | Sample 9 + 23 g/dm$^3$ (8 ppb) AS1925 - ¼" | 6.69 (971) |
| Sample 23 | Sample 8 + 17 g/dm$^3$ (6 ppb) PA6 2 - ¼" | 2.14 (310) |
| Sample 24 | Sample 8 + 28 g/dm$^3$ (10 ppb) PA6 2 - ¼" | 3.54 (513) |
| Sample 25 | Sample 8 + 17 g/dm$^3$ (6 ppb) PU6 1 - ¼" | 2.49 (361) |

(continued)

| Sample | Slurries | Shear Strength MPa (psi) |
|---|---|---|
| Sample 26 | Sample 8 + 28 g/dm$^3$ (10 ppb) PU6 1 - ¼" | 4.14 (600) |
| Sample 27 | 114 g/dm$^3$ (40ppb) EMI-1820 (Unweighted) | 18.56 (2692) |
| Sample 28 | Sample 27 at 1.5 g/cm$^3$ (12.5ppg) | 6.65 (965) |
| Sample 29 | Sample 27 at 1.9 g/cm$^3$ (16ppg) | 3.83 (556) |
| Sample 30 | 114 g/dm$^3$ (40ppb) EZ SQUEEZE® (Unweighted) | 5.58 (810) |
| Sample 31 | Sample 30 at 1.5 g/cm$^3$ (12.5ppg) | 1.89 (271) |
| Sample 32 | Sample 30 at 1.9 g/cm$^3$ (16ppg) | 1.51 (219) |
| Sample 33 | 228 g/dm$^3$ (80 ppb) FORM-A-SQUEEZE® (Unweighted) | 0.41 (60) |
| Sample 34 | Sample 33 at 1.5 g/cm$^3$ (12.5 ppg) | 0.34 (50) |
| Sample 35 | Sample 33 at 1.9 g/cm$^3$ (16 ppg) | 0.22 (32) |
| Sample 36 | Sample 33 + 5.7 g/dm$^3$ (2ppb) RSC15 -1/3" | 3.93 (570) |
| Sample 37 | Sample 33 + 5.7 g/dm$^3$ (2ppb) VPB-102 - 5mm | 2.52 (365) |
| Sample 38 | Sample 34 + 5.7 g/dm$^3$ (2ppb) VPB-102 - 5mm | 1.81 (263) |

A standard Pore Plugging Test (PPT) apparatus is used to create a cake from the sample slurries. Standard cake preparation conditions include:

- Volume of pill - as required to produce cake thickness of about 20mm
- 20 micron aloxite disc for substrate (Part No. 170-51), pre-soaked overnight in the base fluid
- Squeeze pressure: apply 2.76 MPa (400 psi) differential for a 10 minute period
- Measure the fluid loss (usually very high)
- Extract the cake and measure its thickness
- Measure the cake strength straight away (do not allow it to dry out)

When forming the cake with high fluid loss mixtures, all of the fluid will quickly run through the cake when the 2.76 MPa (400 psi) pressure is applied. The time for all fluid to pass through should be recorded. To maintain the squeeze pressure across the cake, the PPT piston is allowed to push up against the cake and is kept there under pressure for 10 minutes, typically. This simulates the mud overbalance pressure in the field. The receiver is constantly draining during the test.

The formed defluidized LCM cakes were tested by using a push-out test methodology developed by BP Sunbury, UK to measure the strength of the cake. The test measures shear strength by pressing a pellet out of the cake. Once the cakes are formed, the strength is measured to reduce any effect that drying may have on the cake properties. The formed cake is placed into a close-fitting sample holder (cylinder), which has a hole at the bottom which is ½ the cake diameter (i.e. approx 1" diameter) through which a plug can be punched out. Force is applied via the brass piston, using a "Carver Press," and a pellet is forced out through the hole. The cell is raised up and supported on each edge, allowing the pellet to be free to come out through the hole. The force is applied evenly at 1 pump stroke per 10 second interval. The maximum force in pounds from the gauge is recorded. The recorded pressure is converted to shear strength as follows:

$$S = (F)/A \text{ and } \text{Failure area } (A) = \pi * d * t,$$

Where d is the plug diameter (in), t is the cake thickness (in), A is the failure area (in$^2$), F is the maximum recorded force (lbf), and S is the shear strength (psi).

As shown by the measured shear strength values listed in Table 2, an LCM pill having a high initial shear strength value may lose its strength upon addition of a weighting agent. However, at least a portion of the strength may be retained by the inclusion of a synthetic fiber structure in the pill contents.

Embodiments of the present disclosure may provide for at least one of the following advantages. The present inventors have advantageously discovered that by using wollastonite or other silicate particles, a lost circulation fluid may be created that may be particularly useful in high fluid loss zones (as well as in low fluid loss zones). Without being bound by any particular mechanism, the present inventors believe that disclosed embodiments operate due to a sheeting or leafing of particles across the fissures and fractures. Use of the pills of the present disclosure may allow for the formation of a plug or seal of a permeable formation that has a high compressive strength, which allows for greater pressures to be used without risk of experiencing further losses to the sealed lost circulation zone. Additionally, not only does the pill defluidize faster than previously cited LCM pills, it also may de-water and de-oil effectively, allowing the pill to be applied with both water-based and oil-based drilling fluid systems.

**Claims**

1. A slurry for treating a wellbore, comprising:

   a base fluid;
   from 1.4 g/dm$^3$ to 28 g/dm$^3$ (0.5 ppb to 10 ppb) of at least one synthetic fibrous structure;
   at least one weighting agent; and
   a plurality of calcium silicate particles.

2. The slurry of claim 1, further comprising a natural fibrous structure.

3. The slurry of claim 2, wherein the natural fibrous structure comprises cellulosic fibers.

4. The slurry of any of the preceding claims, wherein the slurry further comprises at least one bridging agent.

5. The slurry of any of the preceding claims, wherein the at least one synthetic fibrous structure comprises at least one of polyester, acrylic, polyamide, polyolefins, polyaramid, polyurethane, vinyl polymers, glass fibers, carbon fibers, regenerated cellulose (rayon), and blends thereof

6. The slurry of any of the preceding claims, wherein the at least one synthetic fibrous structure comprises polyvinyl alcohol.

7. The slurry of any of the preceding claims, wherein the calcium silicate particles comprise wollastonite.

8. The slurry of any of the preceding claims, wherein the base fluid comprises an oleaginous fluid or a non-oleaginous fluid.

9. A method of reducing loss ofwellbore fluid in a wellbore to a formation, comprising:

   introducing into the wellbore an slurry according to any of claims 1 to 8; and
   applying pressure to the slurry to decrease the fluid content of the slurry.

10. The method of claim 9, further comprising:

    introducing at least one spacer pill before the slurry is introduced into the wellbore.

11. The method of claim 9, further comprising:

    introducing at least one spacer pill after the slurry is introduced into the wellbore.

12. The method of claim 9, further comprising:

    introducing into the wellbore a second volume of the slurry; and
    applying pressure to the second slurry to decrease the fluid content of the second slurry.

**Patentansprüche**

1. Aufschlämmung zum Behandeln eines Bohrlochs, umfassend:

   eine Basisflüssigkeit;
   von 1,4 g/dm$^3$ bis 28 g/dm$^3$ (0,5 ppb bis 10 ppb) mindestens einer synthetischen faserigen Struktur;
   mindestens einen Füllstoff; und
   eine Vielzahl von Calciumsilicat-Partikeln.

2. Aufschlämmung nach Anspruch 1, weiter umfassend eine natürliche faserige Struktur.

3. Aufschlämmung nach Anspruch 2, wobei die natürliche faserige Struktur zellulosische Fasern umfasst.

4. Aufschlämmung nach einem der vorhergehenden Ansprüche, wobei die Aufschlämmung weiter mindestens ein Überbrückungsmittel umfasst.

5. Aufschlämmung nach einem der vorhergehenden Ansprüche, wobei die mindestens eine synthetische faserige Struktur mindestens eines von Polyester, Acryl, Polyamid, Polyolefinen, Polyaramid, Polyurethan, Vinylpolymeren, Glasfasern, Kohlenstofffasern, regenerierter Zellulose (Viskose) und Mischungen davon umfasst.

6. Aufschlämmung nach einem der vorhergehenden Ansprüche, wobei die mindestens eine synthetische faserige Struktur Polyvinylalkohol umfasst.

7. Aufschlämmung nach einem der vorhergehenden Ansprüche, wobei die Calciumsilicat-Partikel Wollastonit umfassen.

8. Aufschlämmung nach einem der vorhergehenden Ansprüche, wobei die Basisflüssigkeit eine ölige Flüssigkeit oder eine nicht-ölige Flüssigkeit ist.

9. Verfahren zur Verringerung von Bohrflüssigkeitsverlust in einem Bohrloch an eine Formation, umfassend:

   Einführen einer Aufschlämmung nach einem der Ansprüche 1 bis 8 in das Bohrloch; und
   Beaufschlagen der Aufschlämmung mit Druck, um den Flüssigkeitsgehalt der Aufschlämmung zu verringern.

10. Verfahren nach Anspruch 9, weiter umfassend:

    Einführen von mindestens einer Spacer-Pille bevor die Aufschlämmung in das Bohrloch eingeführt wird.

11. Verfahren nach Anspruch 9, weiter umfassend:

    Einführen von mindestens einer Spacer-Pille nachdem die Aufschlämmung in das Bohrloch eingeführt worden ist.

12. Verfahren nach Anspruch 9, weiter umfassend:

    Einführen eines zweiten Volumens der Aufschlämmung in das Bohrloch ; und
    Beaufschlagen der zweiten Aufschlämmung mit Druck, um den Flüssigkeitsgehalt der zweiten Aufschlämmung zu verringern.

**Revendications**

1. Boue pour le traitement d'un puits de forage comprenant :

   un fluide de base ;
   de 1,4 g/dm$^3$ à 28 g/dm$^3$ (0,5 ppb à 10 ppb) d'au moins une structure fibreuse synthétique ;
   au moins un agent alourdissant ; et

une pluralité de particules de silicate de calcium.

2. Boue selon la revendication 1, comprenant en outre une structure fibreuse naturelle.

3. Boue selon la revendication 2, dans laquelle la structure fibreuse naturelle comprend des fibres cellulosiques.

4. Boue selon l'une quelconque des revendications précédentes, dans laquelle la boue comprend en outre au moins un agent pontant.

5. Boue selon l'une quelconque des revendications précédentes, dans laquelle l'au moins une structure fibreuse synthétique comprend au moins un élément choisi parmi un polyester, un composé acrylique, un polyamide, des polyoléfines, une polyaramide, un polyuréthane, des polymères de vinyle, des fibres de verre, des fibres de carbone, une cellulose régénérée (rayonne) et des mélanges de ceux-ci.

6. Boue selon l'une quelconque des revendications précédentes, dans laquelle l'au moins une structure fibreuse synthétique comprend un alcool polyvinylique.

7. Boue selon l'une quelconque des revendications précédentes, dans laquelle les particules de silicate de calcium comprennent de la wollastonite.

8. Boue selon l'une quelconque des revendications précédentes, dans laquelle le fluide de base comprend un fluide oléagineux ou un fluide non oléagineux.

9. Procédé de réduction de la perte de fluide de puits de forage dans un puits de forage vers une formation, comprenant :

l'introduction dans le puits de forage d'une boue selon l'une quelconque des revendications 1 à 8 ; et l'application d'une pression au niveau de la boue pour diminuer la teneur en fluide de la boue.

10. Procédé selon la revendication 9, comprenant en outre :

l'introduction d'au moins une pilule d'espacement avant l'introduction de la boue dans le puits de forage.

11. Procédé selon la revendication 9, comprenant en outre :

l'introduction d'au moins une pilule d'espacement après l'introduction de la boue dans le puits de forage.

12. Procédé selon la revendication 9, comprenant en outre :

l'introduction dans le puits de forage d'un second volume de la boue ; et l'application d'une pression au niveau de la seconde boue pour diminuer la teneur en fluide de la seconde boue.

**EP 2 398 866 B1**

REFERENCES CITED IN THE DESCRIPTION

**Patent documents cited in the description**

- US 2007244014 A
- US 2002157575 A
- US 6152226 A